# EUROPEAN PATENT SPECIFICATION

(11) **EP 3 504 087 B1**
(45) Date of publication and mention of the grant of the patent: **03.08.2022**
(21) Application number: 17761556.4
(22) Date of filing: 21.08.2017
(51) Int. Cl.: B60R 21/16, B60N 2/00, B60N 2/60

(54) **INFLATABLE DEVICE**
AUFBLASBARE VORRICHTUNG
DISPOSITIF GONFLABLE

(30) Priority: 26.08.2016 GB 201614671
(43) Date of publication of application: 03.07.2019
(73) Proprietor: England, John, Beverley, Yorkshire HU17 8XX (GB)
(72) Inventor: England, John, Beverley, Yorkshire HU17 8XX (GB)
(74) Representative: Corbyn, David Jonathan
(86) International application number: PCT/GB2017/052464
(87) International publication number: WO 2018/037215

(56) References cited:
- WO-A1-2013/039497
- WO-A1-2015/006813
- WO-A1-2017/046745
- DE-A1- 2 165 261
- DE-A1- 4 121 378
- DE-A1- 4 437 394
- DE-A1-102007 026 366
- DE-A1-102007 033 987
- GB-A- 2 091 842
- GB-A- 2 281 718
- GB-A- 2 457 728
- US-A1- 2008 283 565

## Description

### Field of Invention

The invention to which this application relates is an apparatus which provides a blockage and/or storage for preventing loss of small objects from a front vehicle seat. Although the following description refers exclusively to the provision of an apparatus for use with the seat of a car, the skilled person will appreciate that the present invention could also be used in other vehicles or non-vehicles wherein a gap between two objects is required to be blocked.

It is common in vehicles such as cars, vans, and the like for there to be gaps or spaces between the front driver and passenger seats, and a central console unit - usually where the gearbox transmission, handbrake, or storage units are located. As a driver or passenger sits in the seats, credit cards, money, phones and other items often fall out of pockets, or can be knocked off the centre console, and down the sides of car seats which can not only be frustrating to the person, but also dangerous if it becomes a distraction from driving.

Devices have been provided to plug the gaps. Most commonly, there have been provided elongate foam portions which are provided to be inserted between the side of the seat and the centre console. However, such foam portions are generally provided in one size, or a non-adjustable size, and will more often than not be either too big or too small for the gap they are intended to fill, depending on the make and model of the vehicle in which they are to be located. Furthermore, these foam portions can be unsightly and can be easily stained or damaged if, for example, a user spills a drink or food thereon. This can absorb into the material, creating a permanent stain or smell.

It is therefore an aim of the present invention to provide an apparatus that overcomes the aforementioned problems associated with the prior art.

It is a further aim of the present invention to provide a method of manufacturing an apparatus that overcomes the aforementioned problems associated with the prior art.

It is yet a further aim of the present invention to provide a method of using an apparatus that overcomes the aforementioned problems associated with the prior art. In a first aspect of the present invention, there is provided an apparatus arranged to be inserted between two objects, in use, said apparatus including an inflatable bladder; and characterized in that inflation means are provided associated with the bladder to permit selectable inflation and deflation of the apparatus by a user. Typically, said objects may be the seat of a vehicle and a central console of the vehicle. Thus, the apparatus may be placed between the side of the seat and the central console and inflated so as to fill or plug the gab there previously. Consequently, if a person subsequently drops an item such as a mobile phone, wallet, credit card or coins etc., rather than falling down between the seat and console, and underneath the seat, the dropped item merely rests on the apparatus of the present invention and can be immediately picked back up by the user.

In one embodiment, the inflatable bladder forms an elongate member. Typically, said bladder is laterally inflatable, with respect to a longitudinal axis thereof.

Typically, said inflatable bladder is formed from an expandable and/or elastic material.

In the embodiment, said bladder is inflatable to a size as required by a user to fit a particular gap. Thus, the same apparatus as provided by the present invention will be suitable to fill gaps of varying sizes in, for example, different vehicles and the like. The present invention effectively provides a "one size fits all" inflatable apparatus.

In the embodiment, a valve member may be provided associated with the inflation means to permit deflation of the bladder.

In the embodiment, said inflation means are provided as manual inflation means. Said inflation means comprise a bulb pump member. Preferably, said bulb pump member includes a bulb body, air inlet means, and air outlet means. Typically, said air inlet means comprise a one-way valve and said air outlet means comprise a one-way valve. Further typically, said bulb body may be provided as a compressible body, formed from a resilient material.

In one embodiment, said inflation means includes conduit means, provided intermediate said bulb pump member and said inflatable bladder. Typically, said inflation means is arranged to expel air from a bulb body, through air outlet means and into said inflatable bladder, via said conduit means.

In one embodiment, said conduit means further includes a valve member therewith.

Typically, said valve member is actuable to permit release of air from, and thus deflation of, the inflatable bladder.

In one embodiment, said inflation means may be provided at or adjacent a first end of the bladder. Typically, said inflation means may be provided to extend from a longitudinal edge at or adjacent a first end of the bladder. Thus, the provision of the inflation means at or adjacent an end of the bladder allows for discrete storage of the inflation means when the apparatus in positioned in the gap. The inflation means may be easily accessed by a user yet will not be immediately visible to or intrusive on the user.

In the embodiment, the apparatus further includes a sleeve member. Z Said inflatable bladder is provided to be located within, or at least partially within, said sleeve member.

In one embodiment, said sleeve member comprises an elongate member. Typically, said sleeve member includes at least one aperture, through which said inflatable bladder may be inserted. Typically, said at least one aperture is located at or adjacent a first end of the sleeve member. Preferably, said bladder is arranged to be inserted into said sleeve member when in a deflated configuration. In one embodiment, said sleeve member includes at least two apertures, located at or adjacent first and second opposing ends of the sleeve member.

In one embodiment, said at least one aperture is provided as a first slot, located along part of a longitudinal edge of the sleeve member, at or adjacent a first end thereof. Typically, a second aperture is provided as a second slot, located along part of the same longitudinal edge of the sleeve member as the first slot, at or adjacent a second, opposing end thereof.

The provision of at least two slots enables a user to insert or feed the inflatable bladder through a first slot, and either as it is expanding/inflating or prior thereto, can use the second slot to insert their own fingers or hand etc. and grip the leading end of the bladder, pulling it along the length of the sleeve member to ensure it expands and fills the sleeve member correctly as it is inflated.

Typically, said sleeve member is provided of a size and dimensions to accommodate said inflatable bladder when in an inflated configuration.

In one embodiment, said sleeve member may be expandable upon inflation of the inflatable bladder. Typically, said sleeve member may be formed from an expandable and/or elastic material.

In one embodiment, said sleeve member may be provided with an exterior colour, texture and/or material to match that of the upholstery of the vehicle in which the apparatus is to be located. Thus, by providing the sleeve member of a design to match that of the vehicle in which it is located, this enables the apparatus to be discretely located therein, and not stand out or be too prominent, unlike such devices currently available in the prior art.

In one embodiment, said sleeve member may include an opening located along a longitudinal axis, or part thereof. Typically, said opening may be provided with fastening means to close the same. Preferably, said fastening means may comprise any of the following: a zip fastener, hook and loop fasteners, studs, clips and/or the like.

In one embodiment, said sleeve member may include one or more logos, branding messages and/or the like provided thereon. Typically, said logo and/or branding may be provided to be that of a manufacture of the vehicle in which the apparatus is to be located, the brand of a leasing or vehicle rental company, apparatus manufacturer, and/or the like. In another embodiment, said sleeve member may include custom design, messages, names or logos, as determined by a user.

In embodiments where at least two apertures or slots are provided on the sleeve member, and where any imagery, branding, messages names and/or logos are provided on the sleeve member, the provision of the at least two apertures or slots enables a user to place both the sleeve member and the inflatable bladder in a preferred orientation, allowing the imagery, branding, messages names and/or logos to be optimally displayed.

Typically, said sleeve member may be interchangeable with the inflatable bladder. Thus, different sleeve members may be provided for different vehicles, without the need to provide additional bladders.

In another aspect of the present invention, there is provided a method of manufacturing an apparatus arranged to be inserted between two objects, in use, said method including the steps of: forming and proving an inflatable bladder; and characterized in that inflation means are provided associated with the bladder to permit selectable inflation and deflation of the apparatus by a user.

In another aspect of the present invention, there is provided a method of using an apparatus arranged to be inserted between two objects, in use, said method including the steps of: providing an apparatus as described above; locating the inflatable bladder in a gap between the two objects, as required; and actuating the inflation means to inflate the bladder to fill the gap.

In the ebodiment, a sleeve member is provided. Said inflatable bladder, prior to inflation is located within, or at least partially within, said sleeve member, and subsequently located in the gap between the two objects.

In the embodiment, a valve member is provided associated with the inflation means to permit deflation of the bladder. Typically, after use of the apparatus, the valve member may be actuated to permit deflation and subsequent removal of the apparatus from the gap.

Embodiments of the present invention will now be described with reference to the accompanying figures, wherein:

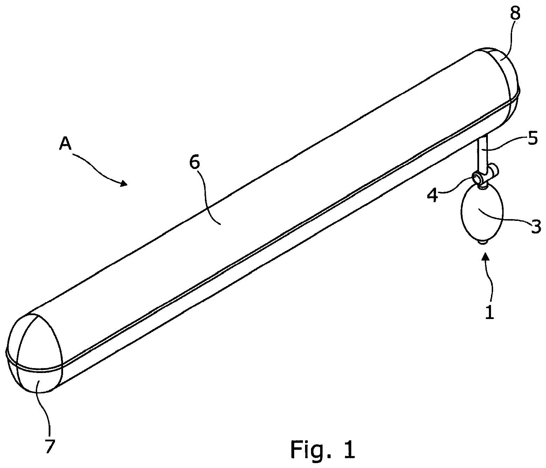

Figure 1 illustrates an isometric view of an apparatus according to an embodiment of the present invention;

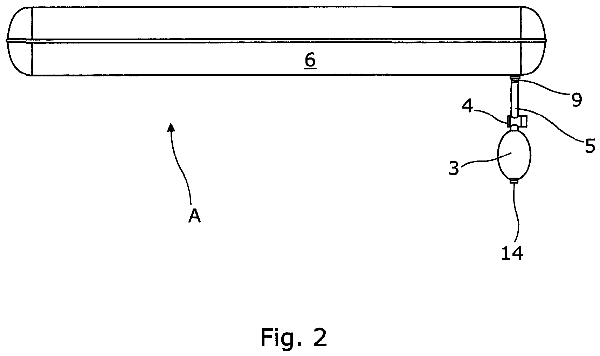

Figure 2 illustrates a side view of an apparatus, in accordance with an embodiment of the present invention;

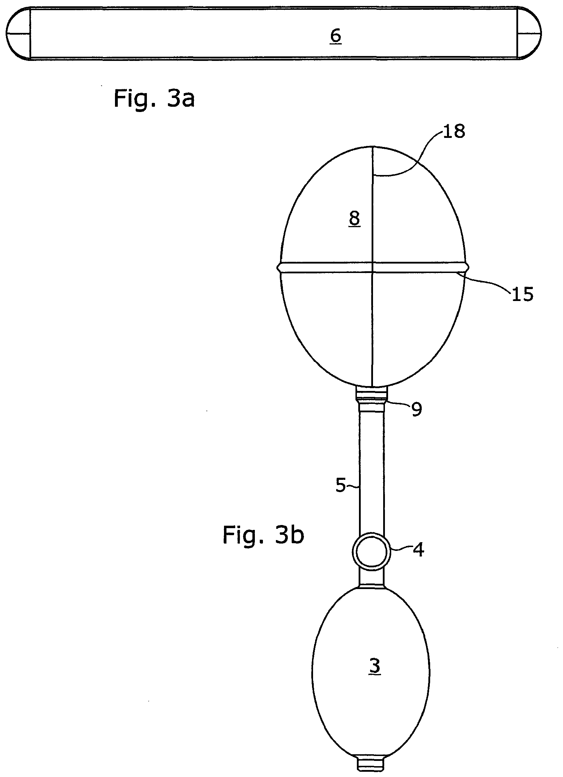

Figure 3a illustrates a view from below of the embodiment shown in Figure 1; Figure 3b illustrates an end view of the embodiment shown in Figure 1;

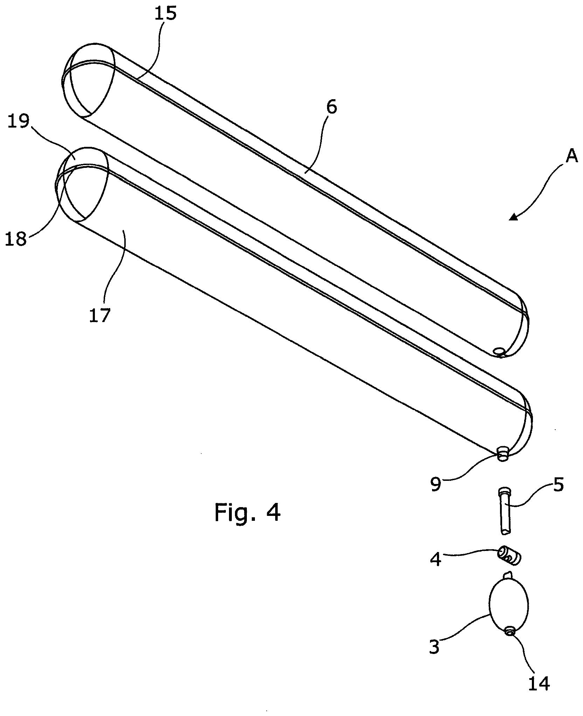

Figure 4 illustrates an exploded isometric view of the embodiment shown in Figure 1;

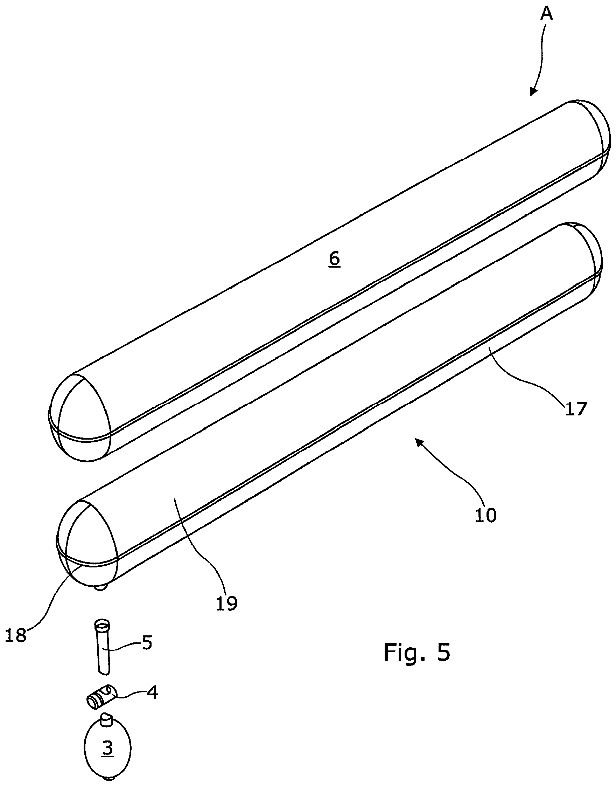

Figure 5 illustrates an exploded isometric view of the embodiment shown in Figure 1;

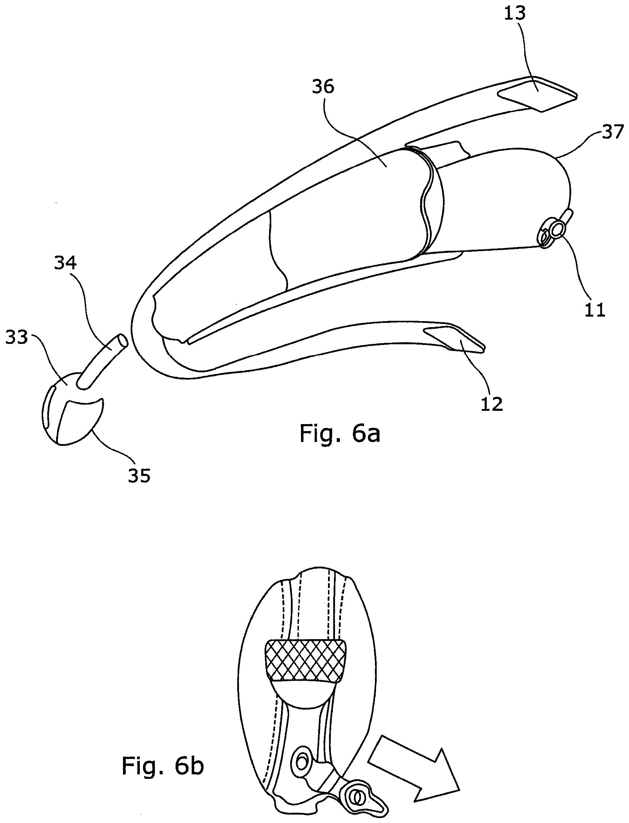

Figure 6a illustrates an exploded isometric view of an apparatus in accordance with another embodiment of the present invention;
Figure 6b illustrates an end view of an apparatus in accordance with another embodiment of the present invention; and
Figure 7 illustrates a side view of an apparatus, in accordance with another embodiment of the present invention.

With reference to the figures there is shown an apparatus A for inserting, in use, into a space or gap between two objects, for example, a vehicular seat and another object or structure, in particular such as the transmission tunnel, central console or coin tidy. In this way, a space or gap may be filled and small objects prevented from falling into this space.

The apparatus A thereby comprises an elongate body formed from an inflatable bladder 10, and further comprises an outer sleeve 6 located over the inner bladder 10, the body arranged to fit into the space or gap. In this way, the apparatus A may be available in a plurality of sizes according to make and model. In some embodiments of the present invention, the body is adjustable in diameter so as to expand or contract to fit the space or gap.

Embodiments of the apparatus A comprise inflation means so as to minimise size for non-use, transport or storage. The apparatus A may therefore comprise a laterally expandable body which is elongate in shape, so as to effectively fill the narrow space or gap defined between a seat and the central feature of a standard vehicle such as a car.

In the first pictured embodiment, inflation means are provided in the form of an inflation mechanism 1, comprising a manual rubber or elastomer pump bulb 3 situated on a conduit in the form of a flexible tube 5, which may be screwed into a collar 9 on the bladder, and depending from the bottom face of the body, adjacent an end. The collar 9 may be formed from any or any combination of a plastics, PVC, metal or metal alloy material. This inflation mechanism 1 comprises a release valve mechanism 4 bonded directly into the inflation tube 5 which is turned to release the air and an air inlet 14.

In the second pictured embodiment, the inflation mechanism comprises a manual bulb 33 with grip pads 35, and a tube 34 connection to the bladder 37, as well as an inflation valve 11.

In other embodiments of the present invention, the inflation mechanism may comprise a self-inflation valve, wherein the bladder is biased to open.

In some embodiments, the enlargement mechanism may be combined with or complementary to a length adjustment means.

The apparatus A therefore comprises an elongate body sized to fit between a front seat and centre console of a vehicle and in some embodiments adjustable in size.

The first pictured embodiment provides an inflatable bladder 10 which can be placed down the side of the seat or seats to prevent objects from passing and falling down. Finishes and covers 6 may help the apparatus A blend in with the vehicle's interior styling. In some embodiments, the apparatus A may comprise a displaceable cover system suitable for customising the aesthetics of the apparatus A, for example as shown in the second embodiment.

In its deflated state, the bladder can be stored flat or may be rolled up.

The body as pictured comprises a top and bottom face, and sides connecting the top and bottom, and two ends 7,8, wherein end 8 is envisaged to be towards the rear of the seat in use.

The top and bottom may be identical in some embodiments. In other embodiments, the top may provide a substantially flat top, so as to enable a user to use the top as a useful surface.

In the pictured embodiment, the bladder and cover are formed of a plurality of pieces, wherein the cover comprises an external ridge or seam 15 and plural end sections 16. The seam may combine with a lozenge shape in section to the body in limiting rotation, wherein the seam catches on the surrounding objects or surfaces. In some embodiments, the seam may be formed in a separate or resiliently deformable material or format, for example comprising a silicone braiding.

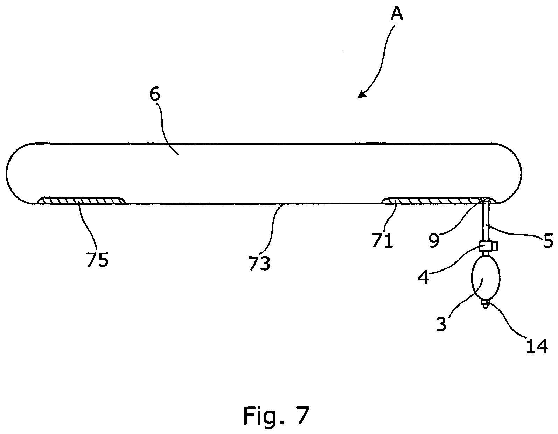

In a preferred embodiment, and as illustrated in Figure 7, the cover 6 may be provided in the form of a sleeve member, in which the bladder may be at least partially located. Typically, the cover 6 is elongate and includes at least a first aperture or slot 71 through which the bladder 10 may be inserted. For ease of use, the bladder 10 is arranged to be inserted into the cover 6 when in a deflated configuration. The slot 71 may be located along part of a longitudinal edge 73 of the cover 6, at or adjacent a first end thereof. In some embodiments of the present invention, two slots 71, 75 may be provided on the cover 6, each located along part of the same longitudinal edge of the sleeve/cover, at or adjacent opposing ends thereof. The provision of at least two slots, 71, 75 enables a user to insert or feed the inflatable bladder 10 through a first slot 71, and either as it is expanding/inflating or prior thereto, can use the second slot 75 to insert their own fingers or hand etc. and grip the leading end of the bladder 10, pulling it along the length of the cover 6 to ensure it expands and fills the cover 6 correctly as it is inflated.

In some embodiments, the top may be provided with a surface arranged for use, for example comprising indentations, hook and loop material such as Velcro (RTM) or substantially rigid material or coating.

In some embodiments, the bladder may comprise two differing materials or formations, between top 15 half and bottom 17 half, so as to provide for differing characteristics. For example, in this way the top surface or half 19 may be more resistant and/or less prone to deformation or bending, whereas the lower half 17 may be more resiliently deformable so as to allow deformation to accommodate surroundings better.

In some embodiments, this top may be provided by a separate or separable part, which part may comprise a substantially rigid cover, for example including pockets or a cup holder.

In some embodiments, the cover may be leather or flexible, and comprises an outer sleeve for the inflatable body.

Multiple outer sleeve covers may be available to match car interiors, for a more premium finish. Automotive style stitching is employed to match with car interiors. The pictured embodiment's bladder has a flocked outer finish cover and so provides a soft touch feel.
+ Simple, inflatable design.
+ It can conform to any gap between the car seat and the centre console.
+ Easy interaction pump, placeable at a position where it is easy to use.
+ Optional covers to complement styling.

In use, a user would:
Slot the device into the gap between the seat and the centre console.

Pump until has filled the void, blocking items from falling under the seat.

To suit personal preference, the pump can be positioned to front or rear of seat in use.

The embodiments may comprise exterior vinyl covers with automotive style stitching to help tie the product aesthetics to its environment. Stretchy vinyls are available in a variety of different styles, colours and finishes to match up with any car interior. As the bladder inflates, the exterior vinyl expands with it.

In the second embodiment, displaceable vinyl sections 36 reveal air release valve.

The bottom panel advantageously houses a semi rigid spine. The Velcro (RTM) pads 12,13 are either stitched or adhered to the vinyl panels.

## Claims

1. An apparatus (A) arranged to be inserted between a side of a seat and a central console of a vehicle, in use, said apparatus including an inflatable bladder (10); further including inflation means (1) provided associated with the bladder (10) to permit selectable inflation and deflation of the apparatus by a user; and **characterized in that** said inflation means (1) comprise a bulb pump member which includes a bulb body (3), air inlet means (14), air outlet means, and a valve member (4) to permit deflation of the inflatable bladder (10), and wherein the apparatus further includes a sleeve member (6), and said inflatable bladder (10) is provided to be located within, or at least partially within, said sleeve member (6).

2. An apparatus (A) according to claim 1, wherein the inflatable bladder (10) forms an elongate member, laterally inflatable, with respect to a longitudinal axis thereof.

3. An apparatus (A) according to claim 1, wherein said inflatable bladder (10) is formed from an expandable and/or elastic material.

4. An apparatus (A) according to claim 1, wherein said bladder (10) is inflatable to a size as required by a user to fit a gap between the side of a seat and the central console of a vehicle.

5. An apparatus (A) according to claim 1, wherein said sleeve member (6) comprises an elongate member, including at least one aperture (71), through which said inflatable bladder (10) is arranged to be inserted.

6. An apparatus (A) according to claim 1, wherein said sleeve member (6) is expandable upon inflation of the inflatable bladder (10).

7. An apparatus (A) according to claim 1, wherein said sleeve member (6) is provided with an exterior colour, texture and/or material to match that of the upholstery or material of the vehicle in which the apparatus is to be located.

8. An apparatus (A) according to claim 4, wherein at least one aperture (71) is located at or adjacent a first end of the sleeve member (6).

9. An apparatus (A) according to claim 8, wherein said sleeve member (6) includes at least two apertures (71, 75), located at or adjacent first and second opposing ends of the sleeve member (6).

10. A method of manufacturing an apparatus (A) arranged to be inserted between a side of a seat and a central console of a vehicle, in use, said method including the steps of: forming and proving an inflatable bladder (10); providing inflation means (1) to be associated with the bladder to permit selectable inflation and deflation of the apparatus by a user, and **characterized in that** said inflation means are formed having a bulb pump member which includes a bulb body (3), air inlet means (14) and air outlet means, and a valve member (4) to permit deflation of the inflatable bladder (10), and wherein a sleeve member (6) is formed and said inflatable bladder (10) is provided to be located within, or at least partially within, said sleeve member (6).

11. A method of using an apparatus (A) arranged to be inserted between a side of a seat and a central console of a vehicle, in use, said method including the steps of: providing an apparatus (A) as described in claims 1-9; locating the inflatable bladder (10) in a gap between a side of a seat and the central console of the vehicle, as required; and actuating the inflation means (1) to inflate the bladder (10) to fill the gap, as required.

## Patentansprüche

1. Vorrichtung (A), die zum Einsetzen zwischen einer Seite eines Sitzes und einer Mittelkonsole eines Fahrzeugs im Gebrauch angeordnet ist, wobei die genannte Vorrichtung einen aufblasbaren Schlauch (10) beinhaltet; die ferner ein Aufblasmittel (1) beinhaltet, das dem Schlauch (10) zugeordnet bereitgestellt ist, um wählbares Aufblasen und Luftablassen aus der Vorrichtung durch einen Benutzer zuzulassen; und **dadurch gekennzeichnet, dass** das genannte Aufblasmittel (1) ein Pumpballelement aufweist, das einen Ballkörper (3), ein Lufteinlassmittel (14), ein Luftauslassmittel und ein Ventilelement (4) zum Zulassen des Luftablassens aus dem aufblasbaren Schlauch (10) beinhaltet, und wobei die Vorrichtung ferner ein Hüllenelement (6) beinhaltet und der genannte aufblasbare Schlauch (10) bereitgestellt ist, um in oder mindestens teilweise in dem genannten Hüllenelement (6) zu liegen.

2. Vorrichtung (A) nach Anspruch 1, wobei der aufblasbare Schlauch (10) ein längliches Element bildet, das in Bezug auf seine Längsachse seitlich aufblasbar ist.

3. Vorrichtung (A) nach Anspruch 1, wobei der genannte aufblasbare Schlauch (10) aus einem ausdehnbaren und/oder elastischen Material hergestellt ist.

4. Vorrichtung (A) nach Anspruch 1, wobei der genannte Schlauch (10) auf eine von einem Benutzer benötigte Größe, um in eine Lücke zwischen der Seite eines Sitzes und der Mittelkonsole eines Fahrzeugs zu passen, aufblasbar ist.

5. Vorrichtung (A) nach Anspruch 1, wobei das genannte Hüllenelement (6) ein längliches Element mit wenigstens einer Öffnung (71) umfasst, wobei der genannte aufblasbare Schlauch (10) zum Einsetzen durch sie hindurch angeordnet ist.

6. Vorrichtung (A) nach Anspruch 1, wobei das genannte Hüllenelement (6) bei Aufblasen des aufblasbaren Schlauchs (10) ausdehnbar ist.

7. Vorrichtung (A) nach Anspruch 1, wobei das genannte Hüllenelement (6) mit einer bzw. einem äußeren Farbe, Beschaffenheit und/oder Material passend zu der/dem der Ausstattung oder Material des Fahrzeugs, in dem die Vorrichtung zu positionieren ist, versehen ist.

8. Vorrichtung (A) nach Anspruch 4, wobei sich wenigstens eine Öffnung (71) an oder neben einem ersten Ende des Hüllenelements (6) befindet.

9. Vorrichtung (A) nach Anspruch 8, wobei das genannte Hüllenelement (6) mindestens zwei Öffnungen (71, 75) beinhaltet, die sich an oder neben dem ersten und dem zweiten entgegengesetzten Ende des Hüllenelements (6) befinden.

10. Verfahren zur Herstellung einer Vorrichtung (A), die zum Einsetzen zwischen einer Seite eines Sitzes und einer Mittelkonsole eines Fahrzeugs im Gebrauch angeordnet ist, wobei das genannte Verfahren die folgenden Schritt beinhaltet: Bilden und Prüfen eines aufblasbaren Schlauchs (10); Bereitstellen eines Aufblasmittels (1), das dem Behältnis (10) zuzuordnen ist, um wählbares Aufblasen und Luftablassen aus der Vorrichtung durch einen Benutzer zuzulassen, und **dadurch gekennzeichnet, dass** das genannte Aufblasmittel ein Pumpballelement aufweist, das einen Ballkörper (3), ein Lufteinlassmittel (14) und ein Luftauslassmittel und ein Ventilelement (4) zum Zulassen des Luftablassens aus dem aufblasbaren Schlauch (10) beinhaltet, und wobei ein Hüllenelement (6) gebildet wird und der genannte aufblasbare Schlauch (10) so bereitgestellt wird, dass er in oder mindestens teilweise in dem genannten Hüllenelement (6) liegt.

11. Verfahren zur Verwendung einer Vorrichtung (A), die zum Einsetzen zwischen einer Seite eines Sitzes und einer Mittelkonsole eines Fahrzeugs im Gebrauch angeordnet ist, wobei das genannte Verfahren die folgenden Schritte beinhaltet: Bereitstellen einer Vorrichtung (A) nach den Ansprüchen 1 bis 9; Positionieren des aufblasbaren Schlauchs (10) nach Bedarf in einer Lücke zwischen einer Seite eines Sitzes und der Mittelkonsole des Fahrzeugs; und Betätigen des Aufblasmittels (1) nach Bedarf zum Aufblasen des Schlauchs (10) zum Ausfüllen der Lücke.

## Revendications

1. Appareil (A) agencé pour être inséré entre un côté d'un siège et une console centrale d'un véhicule, en utilisation, ledit appareil incluant une vessie gonflable (10) ; incluant en outre des moyens de gonflage (1) prévus en association avec la vessie (10) afin de permettre un gonflage et un dégonflage sélectionnables de l'appareil par un utilisateur ; et **caractérisé en ce que** lesdits moyens de gonflage (1) comprennent un élément pompe à poire qui inclut un corps de poire (3), un moyen d'entrée d'air (14), un moyen de sortie d'air, et un élément soupape (4) pour permettre le dégonflage de la vessie gonflable (10), et l'appareil incluant en outre un élément manchon (6), et ladite vessie gonflable (10) étant prévue pour être localisée dans, ou au moins partiellement dans, ledit élément manchon (6).

2. Appareil (A) selon la revendication 1, dans lequel la vessie gonflable (10) forme un élément allongé, gonflable latéralement, par rapport à un axe longitudinal de celle-ci.

3. Appareil (A) selon la revendication 1, dans lequel ladite vessie gonflable (10) est formée en une matière expansible et/ou élastique.

4. Appareil (A) selon la revendication 1, dans lequel ladite vessie (10) est gonflable jusqu'à une taille telle que requise par un utilisateur afin d'être adaptée à un espace entre le côté d'un siège et la console centrale d'un véhicule.

5. Appareil (A) selon la revendication 1, dans lequel ledit élément manchon (6) comprend un élément allongé, incluant au moins une ouverture (71), à travers laquelle ladite vessie gonflable (10) est agencée en vue de son insertion.

6. Appareil (A) selon la revendication 1, dans lequel ledit élément manchon (6) est expansible lors du gonflage de la vessie gonflable (10).

7. Appareil (A) selon la revendication 1, dans lequel ledit élément manchon (6) est doté d'une couleur, texture et/ou matière extérieure pour qu'elle soit assortie à celle du revêtement ou de la matière du véhicule dans lequel l'appareil est destiné à être localisé.

8. Appareil (A) selon la revendication 4, dans lequel au moins une ouverture (71) est localisée au niveau de ou adjacente à une première extrémité de l'élément manchon (6).

9. Appareil (A) selon la revendication 8, dans lequel ledit élément manchon (6) inclut au moins deux ouvertures (71, 75) localisées au niveau de ou adjacentes à des première et deuxième extrémités opposées de l'élément manchon (6).

10. Procédé de fabrication d'un appareil (A) agencé pour être inséré entre un côté d'un siège et une console centrale d'un véhicule, en utilisation, ledit procédé incluant les étapes de : formage et mise à l'épreuve d'une vessie gonflable (10) ; fourniture de moyens de gonflage (1) destinés à être associés à la vessie afin de permettre un gonflage et un dégonflage sélectionnables de l'appareil par un utilisateur, et **caractérisé en ce que** lesdits moyens de gonflage sont formés pour avoir un élément pompe à poire qui inclut un corps de poire (3), un moyen d'entrée d'air (14) et un moyen de sortie d'air, et un élément soupape (4) pour permettre le dégonflage de la vessie gonflable (10), et dans lequel un élément manchon (6) est formé et ladite vessie gonflable (10) est prévue pour être localisée dans, ou au moins partiellement dans, ledit élément manchon (6).

11. Procédé d'utilisation d'un appareil (A) agencé pour être inséré entre un côté d'un siège et une console centrale d'un véhicule, en utilisation, ledit procédé incluant les étapes : de fourniture d'un appareil (A) tel que décrit dans les revendications 1 à 9 ; de localisation de la vessie gonflable (10) dans un espace entre un côté d'un siège et la console centrale du véhicule, selon les besoins ; et d'actionnement des moyens de gonflage (1) afin de gonfler la vessie (10) pour remplir l'espace, selon les besoins.
